# EUROPEAN PATENT APPLICATION

(11) **EP 4 105 892 A1**
(43) Date of publication of application: **21.12.2022**
(21) Application number: 22177785.7
(22) Date of filing: 08.06.2022
(51) Int. Cl.: G06V 10/44, G06V 20/10, G06V 30/19

(54) **TURF HEALTH CONDITION DETERMINATION SYSTEM AT GOLF COURSE, TURF HEALTH CONDITION DETERMINATION METHOD AT GOLF COURSE AND PROGRAM**

(30) Priority: 17.06.2021 US 202163212091 P; 06.08.2021 JP 2021130173
(71) Applicant: Rakuten Group, Inc., Setagaya-ku Tokyo 158-0094 (JP)
(72) Inventor: Ohlson, Stephen, Boston, MA, 02210 (US); Karani, Salem, Boston, MA, 02210 (US); Au-Yeung, Justin, Boston, MA, 02210 (US); Sayers, Kyle, Boston, MA, 02210 (US); Arlen, Kennan, Boston, MA, 02210 (US)
(74) Representative: Hoffmann Eitle

(57) **Abstract**

Provided are a turf health condition determination system at a golf course, a turf health condition determination method at a golf course, and a program with which it is possible to quickly pinpoint an area in which unhealthy turf is present in the golf course. A first determination module (56) determines, based on a first determination target image which is an image of at least a part of the turf area, a health condition of turf shown in the first determination target image. A second determination module (64) determines, for each of a plurality of second determination target images obtained by dividing the first determination target image in which the shown turf is determined to be unhealthy, the health condition of the turf shown in the second determination target image based on a variation in pixel values of pixels included in the second determination target image.

## Description

### BACKGROUND OF THE INVENTION

### Field of the Invention

The present invention relates to a turf health condition determination system at a golf course, a turf health condition determination method at a golf course, and a program.

### Description of the Related Art

In Japanese Patent Application Laid-open No. 2014-183788, there is described a growth management system which calculates a growth index of a crop based on an image of the crop photographed by a sensor camera.

### SUMMARY OF THE INVENTION

It is thought that the technology as described in Japanese Patent Application Laid-open No. 2014-183788 can be used even in situations in which a health condition of turf of, for example, a fairway or a green of a golf course is to be determined.

However, at golf courses, in order to perform maintenance on unhealthy turf as soon as possible, it is required to quickly pinpoint areas in which unhealthy turf is present at a high frequency such as daily, but the technology as described in Japanese Patent Application Laid-open No. 2014-183788, which relates to crop growth, is not suited to such a situation.

The present invention has been made in view of the above-mentioned problem, and it is an object thereof to provide a turf health condition determination system at a golf course, a turf health condition determination method at a golf course, and a program with which it is possible to quickly pinpoint an area in which unhealthy turf is present in the golf course.

According to one embodiment of the present invention, there is provided a turf health condition determination system at a golf course, the turf health condition determination system including: golf course image acquisition means for acquiring a golf course image obtained by photographing the golf course; turf area extraction means for extracting a turf area indicating at least one of a fairway or a green in the golf course image; first determination means for determining, based on a first determination target image which is an image of at least a part of the turf area, a health condition of turf shown in the first determination target image; and second determination means for determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.

In one aspect of the present invention, the first determination means is configured to determine, for each of a plurality of the first determination target images obtained by dividing an image of the turf area, the health condition of the turf shown in the each of the plurality of first determination target images based on the each of the plurality of first determination target images.

Further, in one aspect of the present invention, the first determination means is configured to determine the health condition of the turf shown in the first determination target image based on an output from a learned model obtained when the first determination target image having a predetermined number of pixels is input to the learned model.

Still further, in one aspect of the present invention, the second determination means is configured to determine the health condition of the turf shown in the each of the plurality of second determination target images based on a magnitude of a standard deviation or a variance of the pixel values of the pixels included in the each of the plurality of second determination target images.

Yet further, in one aspect of the present invention, the second determination means is configured to determine, based on an image obtained by applying a bandpass filter to the each of the plurality of second determination target images, the health condition of the turf shown in the each of the plurality of second determination target images.

Yet further, in one aspect of the present invention, the second determination means is configured to determine, based on an image obtained by performing smoothing processing on the each of the plurality of second determination target images, the health condition of the turf shown in the each of the plurality of second determination target images.

Further, according to another embodiment of the present invention, there is provided a turf health condition determination method at a golf course, the turf health condition determination method including: acquiring a golf course image obtained by photographing the golf course; extracting a turf area indicating at least one of a fairway or a green in the golf course image; determining, based on a first determination target image which is an image of at least a part of the turf area, a health condition of turf shown in the first determination target image; and determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.

Further, according to still another embodiment of the present invention, there is provided a program for causing a computer to execute the procedures of: acquiring a golf course image obtained by photographing a golf course; extracting a turf area indicating at least one of a fairway or a green in the golf course image; determining, based on a first determination target image which is an image of at least a part of the turf area, a health condition of turf shown in the first determination target image; and determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.

### BRIEF DESCRIPTION OF THE DRAWINGS

FIG. 1 is a diagram for illustrating an example of a configuration of a turf health condition determination system according to one embodiment of the present invention.
FIG. 2 is a functional block diagram for illustrating an example of functions of the turf health condition determination system according to the one embodiment of the present invention.
FIG. 3 is an image for showing an example of an RGB image represented in grayscale.
FIG. 4 is an image for showing an example of a segmentation result image.
FIG. 5 is an image for showing an example of a binary image.
FIG. 6 is an image for showing an example of a binary image.
FIG. 7 is an image for showing an example of a turf area image.
FIG. 8 is an image for showing an example of a first determination target image.
FIG. 9 is an image for showing an example of a heat map of a pixel focused on by a CNN.
FIG. 10 is a diagram for schematically illustrating an example of a relationship between the first determination target image and second determination target images.
FIG. 11 is an image for showing an example of a turf health condition determination result image.
FIG. 12 is a flow chart for illustrating an example of a flow of processing to be performed by the turf health condition determination system according to the one embodiment of the present invention.

### DESCRIPTION OF THE EMBODIMENTS

Now, one embodiment of the present invention is described in detail with reference to the drawings.

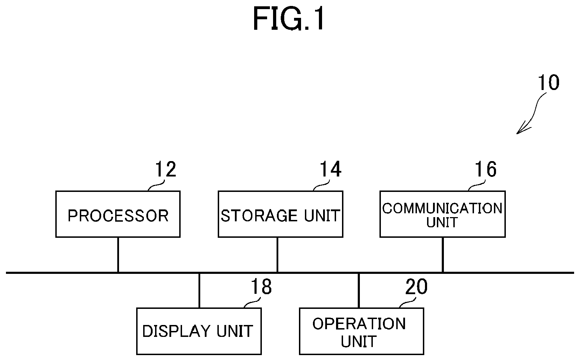

FIG. 1 is a diagram for illustrating an example of a configuration of a turf health condition determination system 10 according to this embodiment. The turf health condition determination system 10 according to this embodiment is, for example, a computer such as a personal computer or a server computer. As illustrated in FIG. 1, the turf health condition determination system 10 includes, for example, a processor 12, a storage unit 14, a communication unit 16, a display unit 18, and an operation unit 20.

The processor 12 is, for example, a program control device such as a central processing unit (CPU) which operates in accordance with programs installed in the turf health condition determination system 10.

The storage unit 14 is, for example, a storage element such as a read-only memory (ROM) or a random-access memory (RAM), a solid-state drive, or a hard disk drive. The storage unit 14 stores programs to be executed by the processor 12 and others.

The communication unit 16 is, for example, a communication interface such as a network board.

The display unit 18 is, for example, a display device such as a liquid crystal display, and displays various images in accordance with instructions from the processor 12.

The operation unit 20 is, for example, a user interface such as a keyboard or a mouse. The operation unit 20 receives operation inputs from the user and outputs to the processor 12 a signal indicating the content of each operation input.

The turf health condition determination system 10 may include, for example, an optical disc drive for reading an optical disc such as a DVD-ROM or a Blu-ray (trademark) disc, and a universal serial bus (USB) port.

The turf health condition determination system 10 according to this embodiment is a combination of an image processing pipeline and a machine learning network. According to the turf health condition determination system 10 of this embodiment, it is possible to detect and identify potential problems in the health condition of the turf of a golf course by using a high-resolution orthomosaic map image obtained by photographing the golf course.

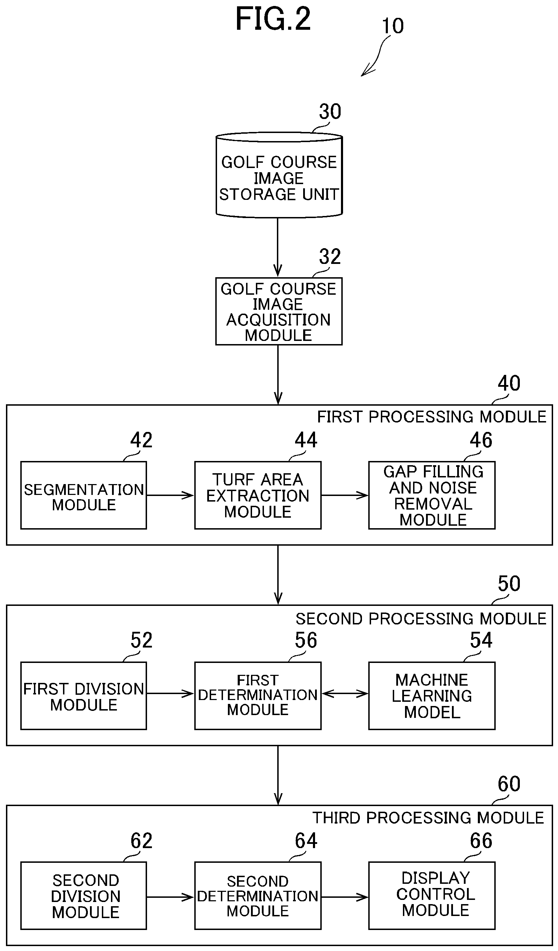

FIG. 2 is a functional block diagram for illustrating an example of functions of the turf health condition determination system 10 according to this embodiment. It is not required that all the functions illustrated in FIG. 2 be implemented in the turf health condition determination system 10 according to this embodiment. Moreover, functions other than the functions illustrated in FIG. 2 may be implemented in the turf health condition determination system 10 according to this embodiment.

As illustrated in FIG. 2, functionally, the turf health condition determination system 10 according to this embodiment includes, for example, a golf course image storage unit 30, a golf course image acquisition module 32, a first processing module 40, a second processing module 50, and a third processing module 60.

As illustrated in FIG. 2, the first processing module 40 includes a segmentation module 42, a turf area extraction module 44, and a gap filling and noise removal module 46. Further, the second processing module 50 includes a first division module 52, a machine learning model 54, and a first determination module 56. The third processing module 60 includes a second division module 62, a second determination module 64, and a display control module 66.

The golf course image storage unit 30 is implemented mainly by the storage unit 14. The golf course image acquisition module 32, the turf area extraction module 44, the gap filling and noise removal module 46, the first division module 52, the first determination module 56, the second division module 62, and the second determination module 64 are implemented mainly by the processor 12. The segmentation module 42 and the machine learning model 54 are implemented mainly by the processor 12 and the storage unit 14. The display control module 66 is mainly implemented by the processor 12 and the display unit 18.

The above-mentioned functions may be implemented by executing programs installed in the turf health condition determination system 10, which is a computer. The programs include commands corresponding to the above-mentioned functions. Further, the programs may be supplied to the turf health condition determination system 10 via a computer-readable information storage medium such as an optical disc, a magnetic disk, a magnetic tape, or a magneto-optical disc, or via the Internet, for example.

In this embodiment, for example, the golf course image storage unit 30 stores a golf course image obtained by photographing the golf course. The golf course image in this embodiment is, for example, an image obtained by photographing the golf course by a camera mounted on an unmanned aerial vehicle (UAV) such as a drone.

The UAV in this embodiment includes, for example, an RGB camera, a near infrared (NIR) camera, and a thermal camera. In this embodiment, an image is taken by each of the RGB camera, the near infrared camera, and the thermal camera.

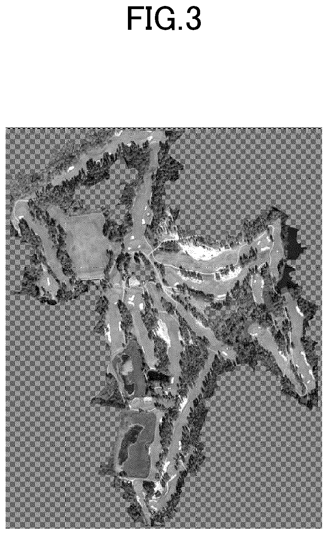

An RGB image, a near-infrared image, and a thermal image, which are orthomosaic map images covering the entire area of the golf course, are generated by executing image processing on those taken images. The generated three types of orthomosaic map images are stored in the golf course image storage unit 30 as the golf course images (RGB image, near-infrared image, and thermal image) in this embodiment. In this embodiment, those orthomosaic map images are, for example, images having a tif format. FIG. 3 is an image for showing an example of the RGB image in this embodiment. The RGB image shown in FIG. 3 is represented in grayscale, but the actual RGB image is a full-color image. Further, geographic information on, for example, latitude and longitude of a place at which the image is taken is associated with the golf course image as a geographic reference.

In this embodiment, the golf course image acquisition module 32 acquires, for example, a golf course image obtained by photographing the golf course. For example, the golf course image acquisition module 32 acquires a golf course image stored in the golf course image storage unit 30.

In this embodiment, for example, the segmentation module 42 segments the golf course image into a plurality of types of different areas. In this case, for example, the areas appearing in the golf course image (for example, RGB image) are segmented into ten area types, that is, an area indicating sand such as a bunker, an area indicating a cart path, an area indicating a building or clutter, an area indicating rough, an area indicating trees, an area indicating a fairway, an area indicating a green, an area indicating a tee box, an area indicating water such as a water hazard, and an area indicating a background.

The segmentation module 42 in this embodiment may include an existing learned Unet neural network. Further, the segmentation module 42 may execute the above-mentioned segmentation by using the learned Unet neural network.

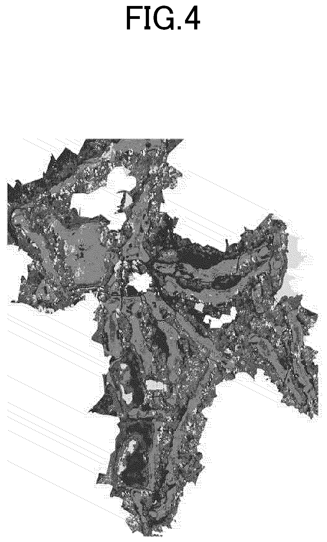

The learned Unet neural network outputs, for example, a segmentation result image shown in FIG. 4 as an example in response to the input of the golf course image. For example, a part or all of the RGB image, near infrared image, and thermal image acquired by the golf course image acquisition module 32 is/are input to the learned Unet neural network.

In this embodiment, for example, different pixel values associated with each of the above-mentioned ten area types are determined in advance. In this embodiment, for example, there is generated a segmentation result image which is a grayscale image in which the number of vertical and horizontal pixels is the same as that of the golf course image, and in which a pixel value associated with the area type is set in each pixel. The area type is a classification result of each pixel in the golf course image associated with those pixels. Further, the segmentation result image in this embodiment is, for example, an image having a png format.

In this embodiment, the turf area extraction module 44 extracts, for example, turf areas indicating at least one of a fairway or a green in the golf course image.

In this embodiment, the turf area extraction module 44 extracts, from the above-mentioned RGB image, the pixels corresponding to the pixels in which a pixel value corresponding to a fairway or a green is set in the segmentation result image, for example.

The turf area extraction module 44 may extract the pixels indicating a fairway or a green from the RGB image by, for example, masking the RGB image through use of a mask image, which is an image obtained by extracting the pixels corresponding to a fairway or a green from the segmentation result image shown in FIG. 4. For example, the pixels corresponding to the pixels shown in the mask image may be extracted from the RGB image.

For example, the turf area extraction module 44 may identify coordinate values of the pixels of a fairway or a green in the mask image. The turf area extraction module 44 may then cut out areas other than the areas indicating a fairway or a green from the RGB image by cross-referencing the identified coordinate values with coordinate values of the pixels included in the RGB image. As a result, in the RGB image, the areas other than the areas indicating a green or a fairway have a predetermined pixel value. For example, in this case, it is assumed that the areas other than the areas indicating a green or a fairway in the RGB image are black pixels. The RGB image in which the areas other than the areas indicating a fairway or a green have been cut out in this way is hereinafter referred to as "extracted RGB image."

In this embodiment, for example, the gap filling and noise removal module 46 executes processing of filling gaps and processing of removing noise on the extracted RGB image.

When segmentation is performed on a high-resolution image by using the above-mentioned Unet neural network, holes or gaps may occur in the above-mentioned mask image relating to the whole golf course. Such holes and gaps are often classified as areas indicating a background or clutter, and such pixels are left out of the mask image. The pixels corresponding to the holes and gaps occurring in the mask image often contain important information for the final classification. In view of this, in this embodiment, processing of filling the holes and gaps is executed.

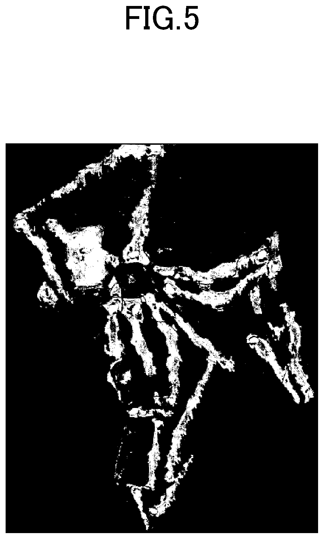

For example, the gap filling and noise removal module 46 first binarizes the extracted RGB image. FIG. 5 is an image for showing an example of an extracted RGB image binarized in this way. The image is hereinafter referred to as "binary image." In the binary image shown in FIG. 5, the areas indicating a fairway or a green are represented in white, and the other areas are represented in black. The binary image may be generated by binarizing the mask image instead of the extracted RGB image.

In this embodiment, for example, the gap filling and noise removal module 46 removes spots of clutter in the background by executing various types of morphological transformation on the binary image.

Specifically, for example, gaps are filled and clutter is removed by executing an opening transformation on the binary image and then executing a closing transformation.

In the opening transformation, for example, erosion is executed to reduce the number of edges of the white areas in the image, and then dilation is executed to enlarge the white areas in the image. Additional noise in the background is removed by the opening transformation.

In the closing transformation, processing that is the exact opposite of the opening transformation is executed. That is, in the closing transformation, dilation is executed and then erosion is executed. Gaps in the foreground are filled by the closing transformation.

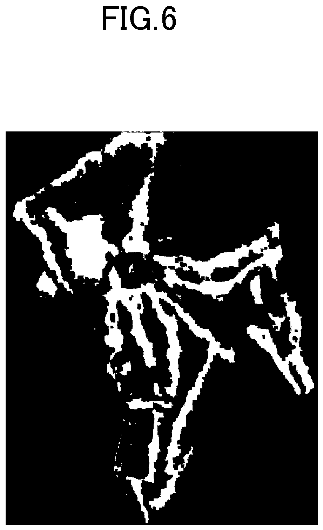

FIG. 6 is an image for showing an example of a binary image obtained by executing the processing described above. The gap filling and noise removal module 46 generates a final extracted RGB image by extracting the pixels corresponding to all of the white pixels in the binary image on which the above-mentioned processing has been executed from the above-mentioned RGB image. The image of the turf area generated in this way is hereinafter referred to as "turf area image."

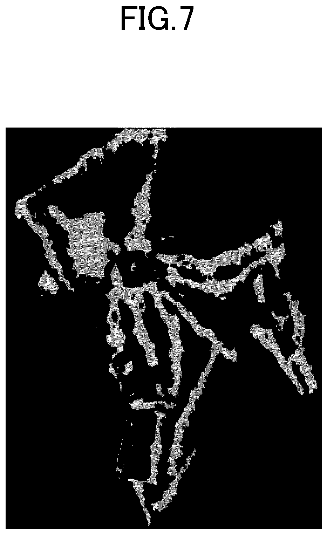

FIG. 7 is an image for showing an example of a turf area image. Similarly to FIG. 3, in FIG. 7, the turf area image is represented in grayscale, but the actual turf area image is a full-color image.

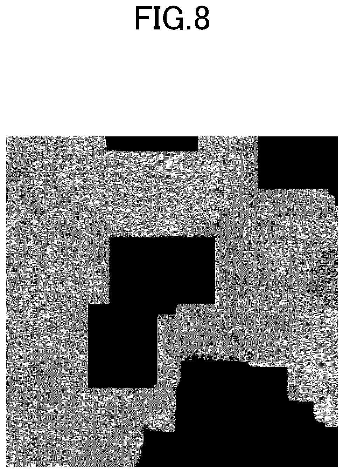

In this embodiment, for example, the first division module 52 generates first determination target images by dividing the above-mentioned turf area image. For example, the first determination target images are generated by dividing the turf area image into areas of a first predetermined number of pixels × a second predetermined number of pixels. Here, it is assumed that the first determination target images are generated by dividing the turf area image into areas of 1,024 pixels × 1,024 pixels. FIG. 8 is an image for showing an example of a first determination target image. The first determination target images in this embodiment are, for example, tile images of 1,024 pixels × 1,024 pixels. The generation of the first determination target images can be easily executed, for example, by a window approach of acquiring the tiles while sliding a window by 1,024 pixels each time.

The background of the turf area image is all black. In view of this, the first division module 52 calculates a ratio of black pixels to the pixels included in the first determination target image. In this case, first determination target images having a ratio of black pixels exceeding 50% are excluded from targets of the subsequent processing. As a result, the processing time can be shortened. Moreover, most of the first determination target images excluded in this way do not show unhealthy turf.

In this embodiment, for example, the machine learning model 54 is a learned machine learning model (learned model) which outputs a heat map image in response to an input of a first determination target image.

In this embodiment, for example, the learning of the machine learning model 54 by using a plurality of pieces of training data may be executed in advance. The training data may include, for example, a learning input image and teacher data. The learning input image may be an image of the turf input to the machine learning model 54 in the learning of the machine learning model 54. The teacher data included in the training data may be, for example, an image showing whether, for each of the pixels included in the learning input image included in the training data, the turf represented by the pixel is healthy or unhealthy. For example, the image that is the teacher data may be, for example, an image that is black for a pixel representing healthy turf and white for a pixel representing unhealthy turf.

Further, for example, the output obtained when the learning input image included in the training data is input to the machine learning model 54 may be identified. In addition, an error (comparison result) between the output and the teacher data included in the training data may be identified. In this case, for example, a softmax entropy error may be identified. Based on the identified error, the value of a parameter of the machine learning model 54 may be updated, for example, by a backpropagation method.

Further, the learning of the machine learning model 54 may be executed by executing the above-mentioned processing for a plurality of pieces of training data.

Due to a relatively small amount of available training data (about 5,000 pieces), the inventor(s) of the present invention initially extracted features by using an Inception ResNet V2 model on which advance learning had been executed, and executed learning of a small sequential convolutional neural network (CNN). Then, the CNN was added to the Inception ResNet V2 model.

Next, learning of a 150-epoch dataset preprocessed by a stochastic gradient descent algorithm at a slow learning rate was executed on only the top four layers of the base model.

Further, the inventor(s) of the present invention used transfer learning instead of performing learning from scratch on the model. Moreover, the inventor(s) of the present invention also executed weight-based learning of ImageNet to take advantage of universal low-level features such as general shape identification.

The inventor(s) of the present invention also executed learning on DenseNet, VGG19, and VGG16 models based on the same learning procedure. In the final learning stage, uncorrelated CNN ensemble learning in which votes were cast by classification labels that took a value of "healthy" or a value of "unhealthy" was executed. As a result, bias is reduced and the classification accuracy is improved.

Further, the inventor(s) of the present invention used false positives and false negatives as metrics for monitoring and adjusting the performance of the model during learning. This was performed in order to reduce the quantity of first determination target images erroneously classified as showing unhealthy turf so as to find as many as possible first determination target images truly showing unhealthy turf and not to lose the trust of the users of the turf health condition determination system 10.

In this embodiment, for example, the first determination module 56 determines, based on a first determination target image which is an image of at least a part of the turf area, a health condition of the turf shown in the first determination target image. For example, it is determined whether the turf shown in the first determination target image is healthy or unhealthy. The first determination target image may be an image obtained by dividing the turf area image as described above. Further, the first determination module 56 may determine, for each of a plurality of the first determination target images obtained by dividing the turf area image, the health condition of the turf shown in the first determination target image based on the first determination target image.

In this embodiment, for example, the first determination module 56 inputs the first determination target images to the learned machine learning model 54.

The first determination module 56 may perform preprocessing by a Gaussian blur on the first determination target images which are not excluded, in order to suppress measurement noise and abnormal spike noise in the pixel values. Further, the first determination module 56 may execute a morphology operation (erosion and dilation) on the first determination target images. The morphology operation is executed in order to further clean the first determination target images by closing boundary discontinuities in shape and filling holes in convex objects in the first determination target images. Moreover, the first determination module 56 may input the first determination target images on which such processing has been executed to the learned machine learning model 54.

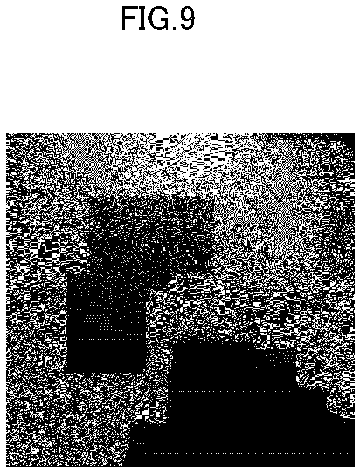

Then, as described above, the learned machine learning model 54 outputs a heat map image in response to the input of the first determination target images. FIG. 9 is an image for showing an example of the heat map image output from the learned machine learning model 54 in response to the input of the first determination target images. The pixel value of each pixel included in the heat map image shown in FIG. 9 corresponds to the probability that the turf represented by the pixel is unhealthy.

The first determination module 56 may identify the probability that the turf shown in each first determination target image input to the learned machine learning model 54 is unhealthy based on the heat map image. When the identified probability is higher than a predetermined threshold value (for example, 85%), the first determination module 56 may determine that the turf shown in the first determination target image is unhealthy.

As described above, the first determination module 56 may determine, based on the output from a learned model obtained when a first determination target image having a predetermined number of pixels is input to the learned model, the health condition of the turf shown in the first determination target image.

However, the determination here is not an accurate determination of the area showing unhealthy turf in the first determination target image of 1,024 pixels × 1,024 pixels. The determination merely indicates that an area showing turf that may be unhealthy is included in the first determination target image.

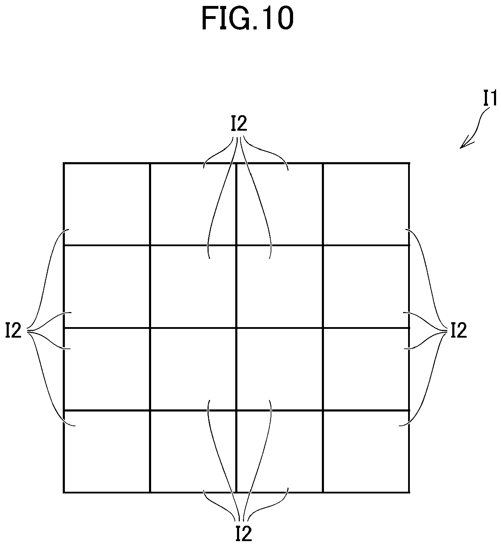

In this embodiment, for example, the second division module 62 generates, for each first determination target image in which the shown turf is determined to be unhealthy, second determination target images by dividing the first determination target image into areas of a third predetermined number of pixels × a fourth predetermined number of pixels. For example, as illustrated in FIG. 10, it is assumed that second determination target images I2 are generated by dividing a first determination target image I1 into areas of 256 pixels × 256 pixels. In this example, 16 second determination target images I2 are generated from one first determination target image I1.

Second determination target images in which all the pixels are black pixels are excluded from targets of the subsequent processing. This helps to accurately pinpoint the places in which unhealthy turf is present. Further, it is also possible to hide unrelated areas in the golf course that exist in about the same number as areas in which unhealthy turf is present.

In this embodiment, for example, the second determination module 64 determines, for each of a plurality of second determination target images obtained by dividing a first determination target image in which the shown turf is determined to be unhealthy, the health condition of the turf shown in the second determination target image based on a variation in pixel values of pixels included in the second determination target image.

In this embodiment, in order to exclude false positives, the second determination module 64 executes additional determination processing of searching for areas having uniform pixel values with few outliers. In this case, the second determination module 64 searches for areas having little or no variation in color distribution, like areas in which it is not clear whether the turf shown in the area is unhealthy or whether the shown turf is sick.

The second determination module 64 may first apply a bandpass filter to the second determination target image. The bandpass filter is, for example, a filter which removes a color corresponding to an area indicating sand such as a bunker, an area indicating a path, a black area, or an area other than turf.

The second determination module 64 may perform smoothing processing on the second determination target image in order to suppress noise. For example, the second determination module 64 may perform smoothing processing on the second determination target image by additionally performing a rough Gaussian blur. As a result, the health condition of turf can be determined more accurately.

The second determination module 64 may determine the health condition of the turf shown in a second determination target image based on a magnitude of a standard deviation or a variance of the pixel values of the pixels included in the second determination target image. For example, it is determined whether the turf shown in the second determination target image is healthy or unhealthy. For example, the second determination module 64 identifies a value (for example, standard deviation or variance) indicating a variation of the pixel values of the pixels included in the second determination target image. When the difference between the value indicating the variation of the pixel values and a predetermined value (a small value is assumed) is equal to or less than a threshold value, the second determination module 64 may determine that the turf shown in the second determination target image is healthy (that is, a false positive).

Moreover, when a value (for example, standard deviation or variance) indicating the variation of the pixel values of the pixels included in the second determination target image is less than a predetermined threshold value, the second determination module 64 may determine that the turf shown in the second determination target image is healthy (that is, a false positive).

The area corresponding to the second determination target image determined to be a false positive in this way is excluded from the areas in which the turf is determined to be unhealthy.

The second determination module 64 may determine the health condition of the turf shown in a second determination target image based on the image obtained by applying the bandpass filter to the second determination target image as described above.

Further, the second determination module 64 may determine the health condition of the turf shown in a second determination target image based on the image obtained by performing smoothing processing on the second determination target image as described above.

The inventor(s) of the present invention ranked a plurality of sample second determination target images based on the number of outliers present in a histogram of the pixel values. For the second determination target images in the top 25% in terms of the number of outliers, it was found that the variation of the pixel values can be analyzed based on the standard deviation of the histogram of the pixel values. From this finding, the inventor(s) of the present invention discovered that the standard deviation of the pixel values of second determination target images showing uniform and healthy turf tends to be tight, that is, small.

In view of this, in this embodiment, as described above, it is determined whether or not the second determination target image is a false positive based on the standard deviation or the variance of the pixel values.

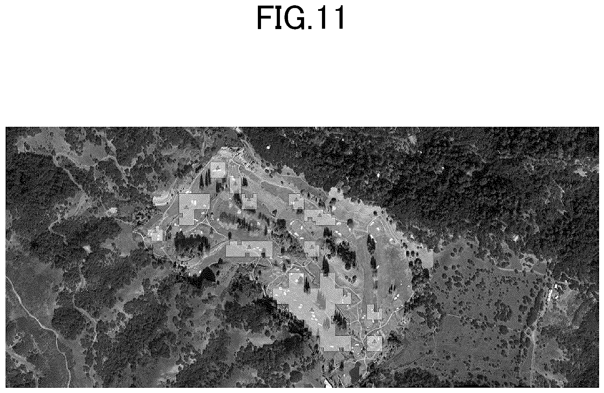

In this embodiment, for example, the display control module 66 generates a turf health condition determination result image shown in FIG. 11 as an example based on the determination results obtained by the first determination module 56 and the second determination module 64, and displays the generated turf health condition determination result image on the display unit 18.

The display control module 66 may, for example, identify healthy turf areas, which are geographical areas corresponding to fairways or greens in which the growing turf is healthy, and unhealthy turf areas, which are geographical areas corresponding to fairways or greens in which the growing turf is unhealthy. For example, the display control module 66 may identify, as the healthy turf areas, the geographical areas associated with first determination target images which have been determined by the first determination module 56 as showing healthy turf. Further, the display control module 66 may identify, as the healthy turf areas, the geographical areas associated with second determination target images which are images obtained by dividing first determination target images which have been determined by the first determination module 56 as showing unhealthy turf, and are images which have been determined by the second determination module 64 as showing healthy turf.

Further, the display control module 66 may identify, as the unhealthy turf areas, the geographical areas associated with second determination target images which are images obtained by dividing the first determination target images which have been determined by the first determination module 56 as showing unhealthy turf, and are images which have been also determined by the second determination module 64 as showing unhealthy turf.

Further, the display control module 66 may generate a turf health condition determination result image in which the healthy turf areas and the unhealthy turf areas are represented in an identifiable manner. For example, a turf health condition determination result image in which the healthy turf areas and the unhealthy turf areas are represented by using different colors may be generated.

In this embodiment, for example, when the determination by the second determination module 64 described above is completed, the determination result is converted into a geographic reference based on the geographic information associated with the second determination target image.

In this case, for example, the geographic reference of the second determination target image is converted into polygons, and then the polygons are grouped by using a cascaded union algorithm in the open-source Python library. As a result of the grouping, all adjacent polygons are grouped into a series of newly grouped polygons.

The coordinates of a polygon representing an unhealthy turf area are used to generate an API request to generate a turf health condition alert marker. The turf health condition alert marker is saved as a GeoJSON format file and visualized as a translucent polygon on a given orthomosaic map. An example of an image visualized in this way is the turf health condition determination result image shown in FIG. 11 as an example.

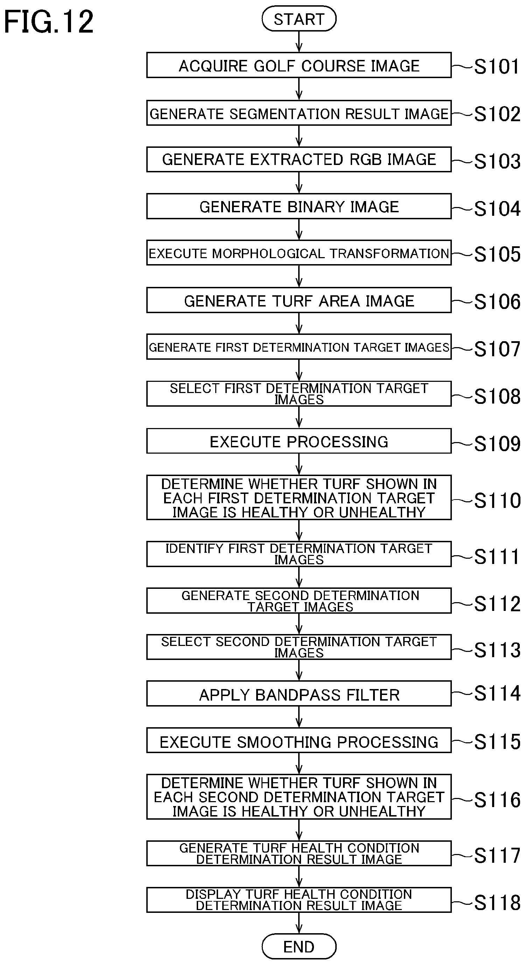

An example of a flow of processing to be performed by the turf health condition determination system 10 according to this embodiment is now described with reference to a flow chart illustrated in FIG. 12 as an example.

In this processing example, it is assumed that three golf course images (RGB image, near infrared image, and thermal image) obtained by photographing a given golf course are stored in advance in the golf course image storage unit 30.

First, the golf course image acquisition module 32 acquires the three golf course images stored in the golf course image storage unit 30 (Step S101).

Then, the segmentation module 42 generates a segmentation result image based on the golf course images acquired in the processing step of Step S101 (Step S102).

Then, the turf area extraction module 44 generates an extracted RGB image by extracting a turf area indicating at least one of a fairway or a green in the RGB image acquired in the processing step of Step S101 (Step S103).

Then, the gap filling and noise removal module 46 generates a binary image based on the extracted RGB image generated in the processing step of Step S103 (Step S104).

Then, the gap filling and noise removal module 46 executes the above-mentioned morphological conversion on the binary image generated in the processing step of Step S104 (Step S105).

Then, the gap filling and noise removal module 46 generates a turf area image based on the binary image on which the morphology conversion is executed in the processing step of Step S105 and the RGB image acquired in the processing step of Step S101 (Step S106) .

Then, the first division module 52 generates a plurality of first determination target images by dividing the turf area image generated in the processing step of Step S106 (Step S107) .

Then, the first division module 52 selects, from among the plurality of first determination target images generated in the processing step of Step S107, the first determination target images on which the following processing steps are to be executed (Step S108) .

Then, the first determination module 56 executes predetermined processing, such as preprocessing by Gaussian blur or a morphology operation, on each of the first determination target images selected in the processing step of Step S108 (Step S109) .

Then, the first determination module 56 determines, for each of the first determination target images processed in the processing step of Step S109, whether the turf shown in the first determination target image is healthy or unhealthy (Step S110).

Then, the second division module 62 identifies the first determination target images which have been determined in the processing step of Step S110 as showing unhealthy turf (Step S111).

Then, the second division module 62 generates, for each first determination target image identified in the processing step of Step Sill, a plurality of second determination target images associated with the identified first determination target image by dividing the first determination target image (Step S112) .

Then, the second division module 62 selects, from among the plurality of second determination target images generated in the processing step of Step S112, the second determination target images on which the following processing steps are to be executed (Step S113) .

Then, the second determination module 64 applies a given bandpass filter to each second determination target image selected in the processing step of Step S113 (Step S114).

Then, the second determination module 64 executes smoothing processing on each second determination target image to which the bandpass filter has been applied in the processing step of Step S114 (Step S115).

Then, the second determination module 64 determines, based on the magnitude of the standard deviation or the variance of the pixel values of the pixels included in the second determination target image on which smoothing processing has been executed in the processing step of Step S115, whether the turf shown in the second determination target image is healthy or unhealthy (Step S116).

Then, the display control module 66 generates a turf health condition determination result image based on results of the processing step of Step S110 and the processing step of Step S116 (Step S117).

Then, the display control module 66 displays the turf health condition determination result image generated in the processing step of Step S117 on the display unit 18 (Step S118), and the processing illustrated in this processing example ends.

At golf courses, in order to perform maintenance on unhealthy turf as soon as possible, it is required to quickly pinpoint areas in which unhealthy turf is present at a high frequency such as daily.

When the health condition of turf is to be determined for the entire area of the golf course by using the machine learning model 54, as the number of images input to the machine learning model 54 increases, in general, it takes a longer time to determine the health condition of the turf.

To handle this, it is conceivable to increase the number of pixels included in the first determination target image (increase the data size) so that the geographical area corresponding to the first determination target image input to the machine learning model 54 becomes wider. In this manner, the number of first determination target images required to be input to the machine learning model 54 in order to perform a determination for the entire area of the golf course can be reduced, and hence the time required for determining the health condition of the turf can be shortened.

However, when the number of pixels included in the first determination target image is increased in this manner, the grain size of the geographical area in which the health condition of turf is to be determined by the determination becomes coarser, and consequently, pinpoint determination of the areas cannot be performed.

Thus, in this embodiment, a determination based on the first determination target images is first performed, and based on the results of the determination, the first determination target images in which the shown turf is determined to be unhealthy are divided to generate second determination target images having a narrower geographical area than that of the corresponding first determination target image.

Further, a determination based on variation in the pixel values, which generally has a smaller processing load than that of the determination using the machine learning model 54, is performed on the second determination target images.

In this way, according to this embodiment, through execution of multiple determinations, it is possible to quickly pinpoint the areas in which unhealthy turf is present in the golf course.

The present invention is not limited to the embodiment described above.

For example, it is not required that the second determination module 64 execute the processing step of Step S114 described above. Further, it is not required that the second determination module 64 execute the processing step of Step S115 described above.

Further, the first determination module 56 may determine the health condition of the turf shown in the first determination target images by using another existing method without using the machine learning model 54.

Further, it is not required to determine whether the turf is healthy or unhealthy for the areas indicating a fairway as well as the areas indicating a green. Whether the turf is healthy or unhealthy may be determined for any one of the areas indicating a fairway and the areas indicating a green.

Further, it is not required that the second determination module 64 determine whether the turf shown in a second determination target image is healthy or unhealthy based on the standard deviation or variance of the pixel values of the pixels included in the second determination target image. For example, the pixels having a pixel value which is an outlier may be identified in accordance with a predetermined criterion from among the pixels included in the second determination target image. Then, whether the turf shown in the second determination target image is healthy or unhealthy may be determined based on the number of pixels identified in this manner.

## Claims

1. A turf health condition determination system at a golf course, the turf health condition determination system comprising:
golf course image acquisition means (32) for acquiring a golf course image obtained by photographing the golf course;
turf area extraction means (44) for extracting a turf area indicating at least one of a fairway or a green in the golf course image;
first determination means (56) for determining, based on a first determination target image which is an image of at least a part of the turf area, a health condition of turf shown in the first determination target image; and
second determination means (64) for determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.

2. The turf health condition determination system at a golf course according to claim 1, wherein the first determination means (56) is configured to determine, for each of a plurality of the first determination target images obtained by dividing an image of the turf area, the health condition of the turf shown in the each of the plurality of first determination target images based on the each of the plurality of first determination target images.

3. The turf health condition determination system at a golf course according to claim 1 or 2, wherein the first determination means (56) is configured to determine the health condition of the turf shown in the first determination target image based on an output from a learned model obtained when the first determination target image having a predetermined number of pixels is input to the learned model.

4. The turf health condition determination system at a golf course according to any one of claims 1 to 3, wherein the second determination means (64) is configured to determine the health condition of the turf shown in the each of the plurality of second determination target images based on a magnitude of a standard deviation or a variance of the pixel values of the pixels included in the each of the plurality of second determination target images.

5. The turf health condition determination system at a golf course according to any one of claims 1 to 4, wherein the second determination means (64) is configured to determine, based on an image obtained by applying a bandpass filter to the each of the plurality of second determination target images, the health condition of the turf shown in the each of the plurality of second determination target images.

6. The turf health condition determination system at a golf course according to any one of claims 1 to 5, wherein the second determination means (64) is configured to determine, based on an image obtained by performing smoothing processing on the each of the plurality of second determination target images, the health condition of the turf shown in the each of the plurality of second determination target images.

7. A turf health condition determination method at a golf course, the turf health condition determination method comprising:
acquiring a golf course image obtained by photographing the golf course;
extracting a turf area indicating at least one of a fairway or a green in the golf course image;
determining, based on a first determination target image which is an image of at least a part of the turf area, a health condition of turf shown in the first determination target image; and
determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.

8. A program for causing a computer to execute the procedures of:
acquiring a golf course image obtained by photographing a golf course;
extracting a turf area indicating at least one of a fairway or a green in the golf course image;
determining, based on a first determination target image which is an image of at least a part of the turf area, a health condition of turf shown in the first determination target image; and
determining, for each of a plurality of second determination target images obtained by dividing the first determination target image in which the shown turf is determined to be unhealthy, the health condition of the turf shown in the each of the plurality of second determination target images based on a variation in pixel values of pixels included in the each of the plurality of second determination target images.
